# EUROPÄISCHE PATENTSCHRIFT

(11) **EP 3 866 261 B1**
(45) Veröffentlichungstag und Bekanntmachung des Hinweises auf die Patenterteilung: **10.04.2024**
(21) Anmeldenummer: 20176490.9
(22) Anmeldetag: 26.05.2020
(51) Int. Cl.: H01Q 1/40, H01Q 1/08, H01Q 1/28, B32B 3/08, B32B 5/02, B32B 5/26, B32B 7/03, B32B 27/08, H01Q 1/42

(54) **VERFAHREN ZUM HERSTELLEN EINER ELEKTRONIKANORDNUNG, DIE GEGEN RAUE UMGEBUNGSBEDINGUNGEN GESCHÜTZT IST, FÜR LUFTFAHRZEUGE, ELEKTRONIKANORDNUNG UND LUFTFAHRZEUG**
METHOD FOR MANUFACTURING AN ELECTRONIC ASSEMBLY PROTECTED AGAINST ROUGH ENVIRONMENTAL CONDITIONS, FOR AIRCRAFTS, ELECTRONIC ASSEMBLY AND AIRCRAFT
PROCÉDÉ DE FABRICATION D'UN AGENCEMENT ÉLECTRONIQUE PROTÉGÉ CONTRE DES CONDITIONS ENVIRONNEMENTALES DIFFICILES, POUR AÉRONEFS, AGENCEMENT ÉLECTRONIQUE ET AÉRONEF

(30) Priorität: 27.05.2019 DE 102019114149
(43) Veröffentlichungstag der Anmeldung: 18.08.2021
(73) Patentinhaber: Airbus Defence and Space GmbH, 82024 Taufkirchen (DE)
(72) Erfinder: Friedberger, Alois, 82024 Taufkirchen (DE)

(56) Entgegenhaltungen:
- EP-A1- 1 783 859
- GB-A- 877 072
- RU-C1- 2 333 865
- US-A- 3 178 560
- US-A- 4 912 594
- US-A1- 2013 016 019
- US-A1- 2018 056 895

## Beschreibung

Die Erfindung betrifft ein Verfahren zum Herstellen einer Elektronikanordnung, die gegen raue Umgebungsbedingungen geschützt ist, eine Elektronikanordnung, die gegen raue Umgebungsbedingungen geschützt ist, sowie ein Luftfahrzeug mit einer Elektronikanordnung, die gegen raue Umgebungsbedingungen geschützt ist. Die Elektronikanordnung ist insbesondere für Luftfahrzeuge geeignet.

Antennen und Antennenanordnungen sowie sonstige elektronische Elemente, wie beispielsweise Sensoren, die außen an Luftfahrzeugen angeordnet sind, müssen vor Beschädigungen aufgrund der rauen Umgebungsbedingungen im Flugbetrieb geschützt werden. Zum Schutz von Antennen dienen Radome, welche diese umgeben. Dabei muss das Material eines Radoms gewährleisten, dass Regen, Wind, Schnee und sonstige Partikel, die mit hohen Geschwindigkeiten auf die Oberfläche des Radoms treffen, nicht in dessen Innenraum gelangen. Darüber hinaus muss das Radom eine hohe Durchlässigkeit für elektromagnetische Wellen gewährleisten, die von der Antenne empfangen oder ausgesendet werden.

In modernen Verkehrsflugzeugen ist eine Vielzahl von Antennen, zum Beispiel 30 bis 40, installiert.

Die Druckschrift EP 1 612 139 B1 zeigt ein Radom, das am Bug des Rumpfes eines Luftfahrzeuges befestigt ist. Eine Vorrichtung zur Befestigung des Radoms erlaubt verschiedenartige Positionierungen des Radoms an dem Luftfahrzeug.

EP 2 472 671 A1 zeigt ein Radom, das domförmig einen Raum umgibt, in dem eine Antenneneinrichtung angeordnet ist. Das Radom umfasst eine Schicht aus einem dielektrischen Material, auf der außen eine Hautschicht ausgebildet ist, die Glasfasern enthält. Dadurch soll eine hohe Festigkeit und eine gute Durchlässigkeit von Radiowellen erreicht werden.

US 2015 / 0 069 722 A1 beschreibt eine Dichtung für Flugzeuge mit einem Gelkörper, der aus einem Elastomer und einem inkompressiblen, biegbaren Skelett besteht. Der Gelkörper hat eine klebrige Oberseite und eine klebrige Unterseite. Die Dichtung hat äußere und innere Wände, die ein blattartiges Komposit bilden, das Befestigungslöcher aufweist. Als Teil der Dichtung kann eine Haut vorgesehen sein. Die Dichtung kann einen Ablöse-Film aufweisen, der die klebrigen Flächen vor einem unbeabsichtigten Ankleben an Objekten vor dem Gebrauch schützt.

JP 2016-64 813 A beschreibt ein Hautpanel für ein Flugzeug, das eine laminierte Schicht aus einem Verbundwerkstoff und eine an die Schicht gekoppelte Grundebene aus einem elektrisch leitfähigen, elastischen, thermoplastischen Material aufweist.

EP 1 783 859 A1 offenbart ein Verfahren zur Herstellung einer strukturintegrierten Antenne, bei dem ein Antennen-Vorformling auf einer Trägersystem-Primärstruktur angeordnet wird, wobei der Antennen-Vorformling in einer Schicht angeordnete, flexible, leitfähige Antennenelemente umfasst, Das Bauteil wird durch Temperatur- oder Druckbehandlung ausgehärtet.

US 2013/0016019 A1 beschreibt ein integriertes Antennensystem mit einer Harzschicht, leitfähigen Elementen, die ein Antennensystem bilden, und Schichten aus einem Verstärkungsmaterial. Die Schichten aus Verstärkungsmaterial bilden eine Verstärkung für eine Komposit-Struktur, und die Harzschicht bildet eine Matrix für die Komposit-Struktur.

GB 877,072 A beschreibt einen Flugzeug-Enteiser, mit einem flachen elektrischen Heizelement, das zwischen dielektrischen Schichten angeordnet ist und eine integrale Struktur damit bildet. Eine gegen Erosion beständige Schicht aus rostfreiem Stahl überdeckt die äußere dielektrische Schicht.

US 2018/0056895 beschreibt eine verborgene eingebettete Schaltung zum Aufbringen auf Fahrzeuge. Die Schaltung ist in ein Polymermaterial eingebettet.

US 4 912 594 A beschreibt ein integrales Blitzschutz-Reparatursystem für Flugzeuge mit einem Klebstoff zum Füllen eines Lochs. Eine äußere Oberfläche des Klebstoffs wird durch eine oder mehrere dielektrische Schichten aus vorimprägnierten Glasfaserschichten überdeckt, wobei jede Schicht sich über die zuvor aufgebrachte Schicht hinaus erstreckt. Die dielektrischen Schichten werden durch eine oder zwei Schichten aus metallbeschichtetem Graphitgewebe überdeckt, wobei jede Schicht die zuvor aufgebrachte Schicht überdeckt und sich über diese hinaus erstreckt.

US 3 178 560 A beschreibt eine elektrische Enteisungsvorrichtung zum Befestigen auf einem Bauteil mit einer Schutzschicht aus einem abriebsfesten, flexiblen Material, die das zu schützende Teil überdeckt, und mit einem Kantenteil aus einem leicht trimmbaren flexiblen Material, das an den Kanten des abriebsfesten Materials anliegt und mit diesen verbunden ist. Heizmittel sind unter der Schutzschicht angeordnet und an ihren Kanten durch das Kantenteil umschlossen.

RU 2 333 865 C1 beschreibt eine laminierte Außenhaut eines Luftfahrzeugs mit lateral zueinander versetzten Lagen eines Verbundmaterials.

GB 599 616 A beschreibt ein Heizelement für einen Propeller eines Luftfahrzeugs, wobei ein Heizwiderstand auf einer flexiblen Trägerschicht aufgebracht ist und der Heizwiderstand seinerseits von einer Schutzschicht aus einem Verbundmaterial überdeckt wird.

Aufgabe der Erfindung ist es, ein Verfahren zur Herstellung einer Elektronikanordnung und eine Elektronikanordnung zu schaffen, die elektronische Elemente wie zum Beispiel eine Antenne, einen Sensor und/oder ein sonstiges elektronisches Bauelement umfasst, die eine möglichst geringe Dicke aufweist und die wirksam gegen Beschädigungen durch raue Umgebungsbedingungen geschützt ist, denen zum Beispiel Flugzeuge im Flugbetrieb oder auch Rotoren von Windkraftanlagen ausgesetzt sind, derart weiterzubilden, dass eine aerodynamisch möglichst glatte Oberfläche erreicht wird und die Gefahr von Einschlüssen oder Blasen vermieden wird. Weiterhin soll ein Luftfahrzeug mit einer zuverlässigen und möglichst dünnen Elektronikanordnung geschaffen werden, die außen an einer Struktur angebracht ist, aerodynamisch vorteilhaft ist und dabei frei von möglichen Einschlüssen oder Blasen ist.

Diese Aufgabe wird durch alle Merkmale der unabhängigen Ansprüche 1 und 8 sowie durch die Merkmale des nebengeordneten Anspruchs 13 gelöst. Vorteilhafte Ausgestaltungen sind Gegenstand der Unteransprüche.

Die Aufgabe wird gemäß einem ersten Aspekt der Erfindung gemäß Anspruch 1 gelöst durch ein Verfahren zum Herstellen einer Elektronikanordnung, die gegen raue Umgebungsbedingungen geschützt ist und für Luftfahrzeuge geeignet ist, wobei das Verfahren folgende Schritte umfasst: Bereitstellen einer Struktur, wobei die Struktur eine Außenhaut eines Luftfahrzeugs bildet; Aufbringen einer Folie, die eine Elektronikeinrichtung umfasst, auf einer Oberfläche der Struktur; und Aufbringen mindestens einer Schutzschicht auf einer Oberfläche der Folie, um sie vor Beschädigungen durch Umwelteinflüsse zu schützen, wobei die Schutzschicht aus einem Verbundmaterial gefertigt wird, und wobei eine Anordnung aus mehreren übereinander liegenden Schutzschichten auf der Folie gebildet wird, die einen lateralen Versatz zueinander aufweisen.

Bevorzugt umfasst das Verbundmaterial einen mit Glasfasern verstärkten Kunststoff.

Vorteilhaft umfasst das Verbundmaterial einen mit Kohlenstofffasern verstärkten Kunststoff.

Insbesondere kann die Schutzschicht oder die Anordnung mehrerer Schutzschichten eine Dicke aufweisen, die geringer ist als die zweifache Dicke der Folie.

Vorteilhaft hat die Schutzschicht oder die Anordnung mehrerer Schutzschichten eine Dicke, die der Dicke der Folie entspricht.

Bevorzugt hat die Schutzschicht oder die Anordnung mehrerer Schutzschichten eine Dicke, die geringer ist als die Dicke der Folie.

Besonders bevorzugt ist die Dicke der Schutzschicht oder die Anordnung mehrerer Schutzschichten geringer als die halbe Dicke der Folie.

Vorteilhaft wird zunächst die Folie auf die Struktur aufgebracht, und anschließend wird die Schutzschicht auf der Folie gebildet.

Es kann auch zunächst die Schutzschicht oder Schutzschichtanordnung bzw. das Verbundmaterial an der Folie befestigt werden, und anschließend die Folie mit der Schutzschicht oder Schutzschichtanordnung bzw. mit dem Verbundmaterial auf der Struktur befestigt werden.

Beispielsweise wird zum Aufbringen der Schutzschicht die Folie mit einer vorimprägnierten Schicht versehen, die anschließend ausgehärtet wird.

Zum Aufbringen der Schutzschicht kann die Folie auch mit einer teilweise ausgehärteten Schicht versehen werden, die anschließend vollständig ausgehärtet wird.

Alternativ kann die Folie mit der Schutzschicht versehen werden, nachdem die Schutzschicht vollständig ausgehärtet wurde.

Vorteilhaft wird nach dem Befestigen der Folie auf der Oberfläche der Struktur ein Übergangselement aus einem verformbaren Material an dem Übergang zwischen der Folie und der Struktur angebracht, um den Übergang zu glätten.

Bevorzugt wird die Schutzschicht und/oder eine weitere Schicht zumindest teilweise elektrisch leitend ausgestaltet.

Vorteilhaft umfasst die Elektronikanordnung eine Antenne.

Sie kann zum Beispiel als eine Radomanordnung ausgestaltet ist sein.

Insbesondere umfasst die Elektronikanordnung eine Sensoreinrichtung, und/oder sie ist als Sensoreinrichtung ausgestaltet.

Gemäß einem zweiten Aspekt der Erfindung wird gemäß Anspruch 8 eine Elektronikanordnung geschaffen, die gegen raue Umgebungsbedingungen geschützt ist und inabe für Luftfahrzeuge geeignet ist, umfassend: eine Folie, die eine Elektronikeinrichtung umfasst, zur Befestigung auf einer Oberfläche einer Struktur, wobei die Struktur eine Außenhaut eines Luftfahrzeugs bildet; und mindestens eine Schutzschicht, die auf einer Oberfläche der Folie angeordnet ist, um die Folie vor Beschädigungen durch Umwelteinflüsse zu schützen, wobei die Schutzschicht aus einem Verbundmaterial gefertigt ist, und wobei eine Anordnung mehrerer Schutzschichten auf der Folie ausgebildet ist, die einen lateralen Versatz zueinander aufweisen.

Bevorzugt ist die Schutzschicht aus einem mit Glasfasern verstärkten Kunststoff gefertigt. Vorteilhaft ist die Schutzschicht aus einem mit Kohlenstofffasern verstärkten Kunststoff gefertigt.

Beispielsweise hat die Schutzschicht oder eine Anordnung mehrerer Schutzschichten eine Dicke, die geringer ist als die zweifache Dicke der Folie.

Vorteilhaft hat die Schutzschicht oder eine Anordnung mehrerer Schutzschichten eine Dicke, die der Dicke der Folie entspricht.

Bevorzugt hat die Schutzschicht oder eine Anordnung mehrerer Schutzschichten eine Dicke, die geringer ist als die Dicke der Folie.

Besonders bevorzugt hat die Schutzschicht oder eine Anordnung mehrerer Schutzschichten eine Dicke, die geringer ist als die halbe Dicke der Folie.

Vorteilhafterweise umfasst die Elektronikanordnung ein Übergangselement aus einem verformbaren Material, das an einem Übergang zwischen der Folie und der Struktur angeordnet ist, um den Übergang zu glätten.

Insbesondere kann die Schutzschicht und/oder oder eine weitere Schicht zumindest teilweise elektrisch leitend ausgestaltet sein.

Vorteilhaft umfasst die Elektronikanordnung eine Antenne.

Die Elektronikanordnung kann zum Beispiel als eine Radomanordnung ausgestaltet sein.

Beispielsweise kann die Elektronikanordnung eine Sensoreinrichtung umfassen, und/oder als Sensoreinrichtung ausgestaltet sein.

Bevorzugt ist die wettergeschützte Elektronikanordnung mit dem erfindungsgemäßen Verfahren hergestellt.

Gemäß einem weiteren Aspekt der Erfindung wird gemäß Anspruch 15 ein Luftfahrzeug geschaffen, das eine erfindungsgemäße Elektronikanordnung aufweist.

Ausführungsbeispiele der Erfindung werden nachfolgend anhand der Figuren beschrieben. Dabei zeigt:
- Fig. 1: eine Schnittansicht einer Elektronikanordnung gemäß einer ersten bevorzugten Ausführungsform der Erfindung als schematische Darstellung;
- Fig. 2: eine Detailansicht eines Endbereichs der in Fig. 1 dargestellten Elektronikanordnung;
- Fig. 3: eine Schnittansicht einer nicht unter den Schutzumfang der angehängten Ansprüche fallenden Elektronikanordnung als schematische Darstellung
- Fig. 4: ein Ablaufdiagramm eines Ausführungsbeispiels des erfindungsgemäßen Verfahrens; und
- Fig. 5: ein Verkehrsflugzeug als ein Beispiel des erfindungsgemäßen Luftfahrzeugs.

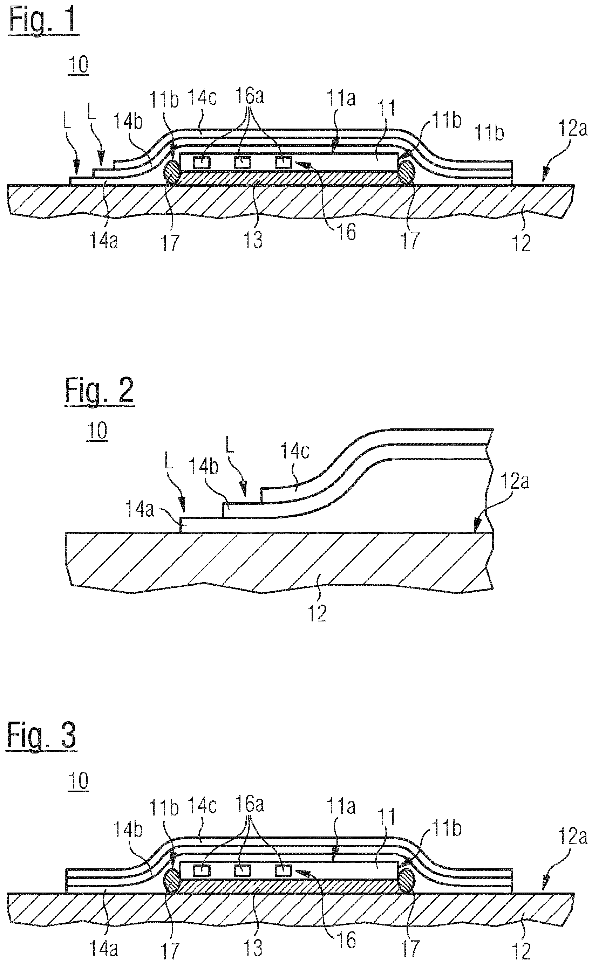

In Fig. 1 ist eine wettergeschützte Elektronikanordnung 10 gezeigt, die in diesem Beispiel als Radom-Anordnung ausgestaltet ist und gemäß der vorliegenden Erfindung hergestellt ist. Sie stellt eine beispielhafte Ausgestaltung der Erfindung dar. Dabei ist eine Folie 11 auf einer Oberfläche 12a einer Struktur 12 befestigt. Die Struktur 12 ist in diesem Beispiel die Außenhaut eines Flugzeugs. Zur Befestigung dient ein Klebstoff 13, der als eine Schicht ausgebildet ist und die Folie 11 mit der Struktur 12 verbindet.

Auf einer Oberfläche 11a der Folie 11 ist eine erste Schutzschicht 14a angeordnet. Oberhalb der ersten Schutzschicht 14a befindet sich eine zweite Schutzschicht 14b und darüber eine dritte Schutzschicht 14c. Die Schutzschichten 14a, 14b, 14c sind aus einem Verbundmaterial gefertigt und schützen die Folie 11 vor Beschädigungen und Erosion durch Umwelteinflüsse, wie beispielsweise Feuchtigkeit, Regen, Schnee, Eis und sonstige Partikel.

Die Folie 11 umfasst eine Elektronikeinrichtung 16 mit elektronischen Komponenten oder Elementen 16a, die in der Folie 11 eingebettet und/oder auf der Folie 11 angeordnet sind. Die Elemente 16a der Elektronikeinrichtung 16 sind zum Beispiel Antennen, Antennenelemente, elektronische Chips und/oder sonstige elektronische Komponenten oder Bauteile, wie beispielsweise Sensoren, Elektronikplatinen, Leiterplatten, usw. Je nach Anwendungsfall können eines oder mehrere bis hin zu tausenden von elektronischen Elementen 16a als Elektronikeinrichtung 16 in der Folie 11 enthalten bzw. daran angeordnet sein, die auf diese Weise eine elektronische Folie bildet.

Die Folie 11 ist flexibel und bildet eine Elektronikbaugruppe. Sie ist direkt außen an der Struktur 12 befestigt, beispielsweise am Rumpf oder an den Tragflächen eines Flugzeugs.

In dem hier gezeigten Beispiel überdeckt eine Anordnung aus drei Schutzschichten 14a, 14b, 14c die elektronische Folie 11. In anderen Ausführungsformen sind eine oder auch eine größere Anzahl von Schutzschichten 14a, 14b, 14c vorgesehen.

Die Überdeckung der Folie 11 ist vollständig, so dass die Folie 11 zwischen der Struktur 12 und der Schutzschicht 14a bzw. der Schutzschichtanordnung 14a, 14b, 14c eingeschlossen ist.

Die Folie 11 und die Schutzschicht bzw. Schutzschichtanordnung 14a, 14b, 14c stehen in gegenseitigem Kontakt und bilden gemeinsam eine Schichtanordnung.

Falls die Elektronikeinrichtung 16 der Folie 11 eine Antenneneinrichtung umfasst, bildet die Schutzschicht 14a, 14b, 14c ein Radom. Das Radom und das dadurch geschützte elektronische Element, das durch die Elektronikeinrichtung 16 der Folie 11 gebildet wird, bilden gemeinsam die Schichtanordnung bzw. einen Schichtaufbau oder ein Schichtsystem.

Die Schutzschicht 14a bzw. die Schutzschichtanordnung 14a, 14b, 14c wird in diesem Beispiel durch glasfaserverstärkten Kunststoff gebildet, da dieser nicht elektrisch leitend ist und die Elektronikeinrichtung 16 in dem hier gezeigten Beispiel Antennenelemente 16a enthält.

In anderen Ausführungsformen, die hier nicht gezeigt sind, werden eine oder mehrere Schutzschichte durch kohlenstofffaserverstärkten Kunststoff gebildet.

Die übereinander liegenden Schutzschichten 14a, 14b, 14c haben jeweils oder gemeinsam eine Dicke, die der Dicke der Folie 11 entspricht. Die Dicke einzelner Schutzschichten 14a, 14b, 14c ist etwa halb so groß wie die Dicke der Folie 11 oder geringer als diese.

Je nach Anwendungsfall kann die einzelne Schutzschicht 14a, 14b, 14c oder die Anordnung von Schutzschichten auch eine größere Dicke aufweisen. Es ist jedoch vorteilhaft, die Schutzschichten möglichst dünn auszugestalten, so dass die gesamte Anordnung 10 eine möglichst geringe Dicke aufweist und damit die Luftströmung an der Oberfläche des Luftfahrzeugs möglichst gering beeinflusst.

An den Kanten 11b der Folie 11 sind ein oder mehrere Übergangselemente 17 angeordnet, die den Übergang zwischen der Folie 11 und der Struktur 12 glätten und dadurch eine Stufe bzw. eine scharfe Unstetigkeit an den Kanten 11b verhindern. Das mindestens eine Übergangselement 17 wird durch ein Material gebildet, das beim Anbringen an den Kanten 11b weich bzw. verformbar ist, ähnlich wie Silikon. Es kann aber auch zum Beispiel durch Kunstharz gebildet werden. Das Übergangselement 17 ist um die Kanten 11b der Folie 11 herum angeordnet.

In bevorzugten Ausführungsformen der Erfindung ist die Schutzschicht 14a bzw. die Anordnung aus mehreren Schutzschichten 14a, 14b, 14c zumindest teilweise elektrisch leitfähig gestaltet, um zum Beispiel Anforderungen hinsichtlich elektromagnetischer Verträglichkeit, Blitzschutz, elektrostatische Aufladung usw. zu erfüllen.

Die Schutzschichten 14a, 14b und 14c sind jeweils mit einem lateralen Versatz L zueinander angeordnet. Auf diese Weise weist die wettergeschützte Elektronikanordnung 10 aerodynamisch eine größere Glätte auf. Das heißt, die Luftströmung an der Oberfläche 12a der Struktur 12 wird durch die Elektronikanordnung 10 geringer beeinflusst und Unstetigkeiten werden vermieden.

Zur Darstellung des lateralen Versatzes L zeigt Fig. 2 eine Detailansicht der in Fig. 1 gezeigten Elektronikanordnung 10 im Bereich der Enden bzw. Kanten der Schutzschichten 14a, 14b, 14c. Aus Gründen der Übersichtlichkeit sind nur die Struktur 12 und die Schutzschichten 14a, 14b, 14c dargestellt. Das heißt, die Folie 11 und die weiteren Teile oder Elemente der Radom- bzw. Elektronikanordnung 10 sind in Fig. 2 nicht dargestellt. Sie sind jedoch wie oben unter Bezugnahme auf Fig. 1 beschrieben ausgestaltet.

In Fig. 3 ist ebenfalls eine Elektronikanordnung 10 dargestellt, bei der die Schutzschichten 14a, 14b, 14c ohne lateralen Versatz angeordnet sind und nicht unter den Schutzumfang der angehängten Ansprüche fällt. Das heißt, ihre Kanten bzw. Enden liegen übereinander. Im Übrigen ist die in Fig. 3 gezeigte Ausführungsform wie die in Fig.1 gezeigte Ausführungsform gestaltet und weist die weiteren Elemente auf, die oben unter Bezugnahme auf Fig. 1 beschrieben und mit denselben Bezugszeichen gekennzeichnet sind.

Die Elektronikanordnung 10 kann insbesondere als Radomanordnung ausgestaltet sein.

In den gezeigten Beispielen enthalten die Elektronikeinrichtungen 16 Antennen oder Antennenelemente, sodass die jeweils gezeigte wettergeschützte Elektronikanordnung 10 eine Radomanordnung bildet, die durchlässig für elektromagnetische Wellen ist. Es ist aber ebenso möglich, dass keine Antennen oder Antennenelemente vorgesehen sind, sondern andere elektronische Bauelemente, wie beispielsweise Sensoren, Schaltkreise, Leitungselemente, usw., die keine elektromagnetischen Wellen senden oder empfangen und durch die mindestens eine Schutzschicht 14a, 14b, 14c geschützt werden.

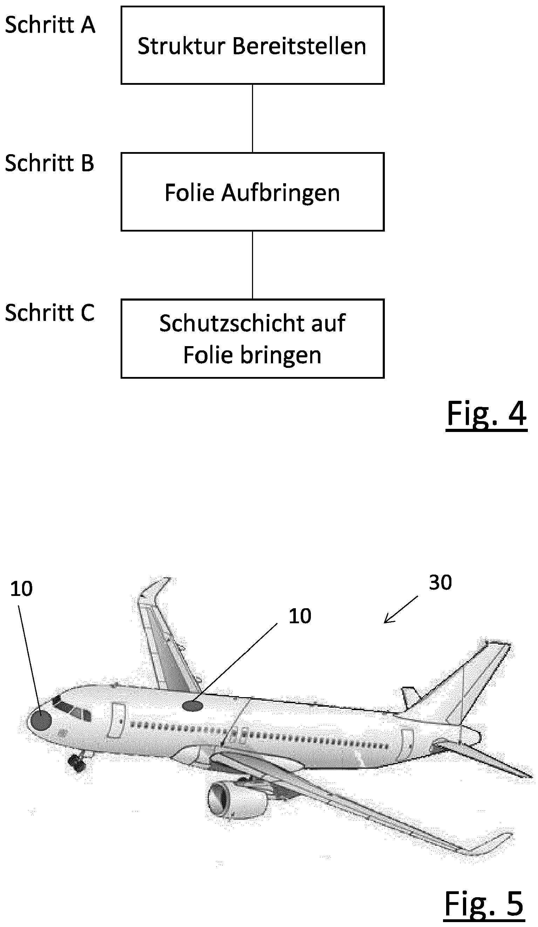

Nachfolgend wird ein Verfahren zum Herstellen einer gegen raue Umgebungsbedingungen geschützte Elektronikanordnung für Luftfahrzeuge als ein Ausführungsbeispiel der Erfindung anhand der Figuren 1 bis 3 im Detail beschrieben. Die Verfahrensschritte sind in Fig. 4 als Ablaufdiagramm dargestellt.

### Schritt A:

Zunächst wird eine Struktur 12 bereitgestellt, um darauf den Schichtaufbau auszubilden, der die Folie 11 und die Schutzschicht(en) 14a, 14b, 14c umfasst. Falls es erforderlich ist, wird die Oberfläche 12a der Struktur 12 vorbehandelt, in dem sie zum Beispiel gereinigt oder auf sonstige Weise vorbereitet wird.

Die Struktur 12 ist beispielsweise ein Flugzeugrumpf bzw. ein Teil davon, oder ein sonstiges Element eines Flugzeugs. Sie kann aber auch zum Beispiel ein Rotorblatt einer Windkraftanlage oder eines Helikopters oder Ähnliches sein, oder auch ein Teil eines Land-, Luft- oder Wasserfahrzeugs, dessen Oberfläche rauen Umgebungsbedingungen ausgesetzt ist.

### Schritt B:

Die Folie 11 wird auf die Struktur 12 bzw. auf die Oberfläche 12a der Struktur 12 aufgebracht. Falls erforderlich wird die Folie 11 auf der Struktur 12 befestigt, beispielsweise mithilfe eines adhäsiven Stoffes oder Klebstoffs 13. Die Folie 11 ist wie oben beschrieben mit elektronischen Elementen versehen, das heißt sie ist als elektronische Folie ausgestaltet.

### Schritt C:

Auf der Oberfläche 11a der Folie 11 wird die Schutzschicht 14a gebildet. In dem hier gezeigten Ausführungsbeispiel werden nacheinander mehrere Lagen von Schutzschichten 14a, 14b und 14c auf der Oberseite 11a der Folie 11 ausgebildet, das heißt an der Seite der Folie 11, die nicht zur Befestigung an der Struktur 12 dient. Die Schutzschicht 14a bzw. die Anordnung der Schichten 14a, 14b und 14c wird durch ein Verbundmaterial gebildet, wie es oben im Detail beschrieben ist.

Die Schutzschichten 14a, 14b, 14c werden so angeordnet, dass sie gegenseitig den lateralen Versatz L aufweisen (siehe Fig. 1 und 2).

Das Bilden der Schutzschicht gemäß Schritt C kann optional auf drei verschiedene Arten durchgeführt werden:

### Option 1 für Schritt C:

Gemäß Option 1 wird die elektronische Folie 11 mit vorimprägnierten Schichten 14a, 14b und 14c bedeckt bzw. überdeckt. Anschließend erfolgt das Aushärten zum Beispiel mit einer als Heizmatte ausgebildeten Heizvorrichtung. Dabei können dieselben Prozesse angewendet werden, wie sie zur Bearbeitung oder zur Reparatur von Verbundwerkstoffen geeignet sind.

Falls es erforderlich ist, kann ein vakuumunterstützter Prozess angewendet werden, um ein aus Verstärkungsfasern gebildetes Halbzeug mit einer Matrix aus einem Kunstharz zu tränken, wobei zum Beispiel eine Vakuumhülle oder -folie eingesetzt wird.

Vorteilhaft wird ein Kunstharz verwendet, der bei einer relativ geringen Temperatur aushärtet. Beispielsweise liegt die Aushärtungstemperatur im Bereich von ca. 120 Grad Celsius anstelle von beispielsweise ca. 180 Grad Celsius. Auf diese Weise wird die thermische Belastung der Elektronik der elektronischen Folie 11 begrenzt bzw. möglichst geringgehalten.

Das flüssige bzw. fließfähige oder fast flüssige Kunstharz in dem vorimprägnierten Halbzeug kann Unstetigkeiten in der Höhe bzw. Dicke der elektronischen Folie 11 oder entlang der Kante 11b der Folie 11 ausgleichen. Je nach Erfordernis werden zusätzlich adhäsive Stoffe bzw. Klebstoffe eingesetzt.

### Option 2 für Schritt C:

Gemäß einer zweiten Option zur Ausbildung der Schutzschicht 14a oder der Schutzschichtanordnung 14, 14b, 14c werden die ein oder mehreren Schichten 14, 14b, 14c in einem bereits teilausgehärteten Zustand auf die Folie 11 aufgebracht. Das weitere Aushärten und die sonstigen Teilschritte erfolgen wie bei Option 1.

### Option 3 für Schritt C:

Gemäß einer dritten Option, die ähnlich durchgeführt wird wie Option 2, ist die Schutzschicht 14a oder die Schutzschichtanordnung 14a, 14b und 14c bereits ausgehärtet und wird danach an der Struktur 12 befestigt, beispielsweise mithilfe eines adhäsiven Stoffs oder Klebstoffs. Das heißt, die Schicht bzw. die Schichten werden als eine zum Beispiel vorgeformte Abdeckung aus Verbundwerkstoffen in ausgehärtetem Zustand auf die Struktur 12 aufgebracht. Je nach Erfordernis kann eine zusätzliche Fixierung, zum Beispiel mithilfe von Nieten, erfolgen.

Um die Unstetigkeiten entlang der Kante 11b der Folie 11 auszugleichen, kann nach dem Aufbringen der elektronischen Folie 11 auf die Struktur 12 ein weiches oder nachgiebiges bzw. verformbares Material, das sich ähnlich wie Silikon verhält, oder ein Kunstharz entlang den Kanten 11b der Folie 11 verteilt werden, beispielsweise in Form eines länglich ausgebildeten Strangs. Dadurch wird das Übergangselement 17 gebildet. Eine scharfe Unstetigkeit bzw. ein Sprung oder Absatz zwischen der Folie 11 und Struktur 12 wird dadurch vermieden bzw. ausgeglichen.

Gemäß einem anderen Ausführungsbeispiel des Verfahrens wird zunächst die elektronische Folie 11 an einer Verbundwerkstoff-Form oder Vorform oder einem Prepreg befestigt, und anschließend wird die so gebildete Einheit an der Struktur 12 befestigt. Das heißt, Schritt C des Verfahrens wird vor dem Schritt B durchgeführt.

Im Fall einer Fehlfunktion bzw. einer erforderlichen Reparatur kann die Schutzschicht 14, 14b, 14c, und gegebenenfalls auch die Folie 11, entfernt werden, zum Beispiel durch Fräsen oder Abschleifen.

Die Composite- bzw. Verbundwerkstoffschichten können bei dem erfindungsgemäßen Herstellungsverfahren teilweise elektrisch leitend ausgeführt werden, um zum Beispiel Anforderungen im Hinblick auf elektronische Verträglichkeit, Blitzschutz, elektrostatische Aufladung oder ähnliches zu erfüllen.

Weitere Anwendungsmöglichkeiten der Erfindung sind Sensoren zum Überwachen des Zustands der Oberfläche (SHM - Structural Health Monitoring). Das heißt die ElektronikAnordnung der Folie 11 der erfindungsgemäßen, gegen raue Umgebungsbedingungen geschützten Elektronikanordnung 10 weist einen oder mehrere derartige Sensoren oder auch Sensoren für andere Überwachungszwecke auf.

Optional können zusätzliche Schutzschichten oder Barriereschichten auf der Folie 11 aufgebracht werden, und die Erfindung kann in Kombination mit weiteren Verbundwerkstoffen-Schutzeinrichtungen ausgeführt werden.

Durch die Erfindung wird die dünne Folie 11 durch eine oder mehrere der Schutzschichten 14a, 14b, 14c wirksam geschützt, so dass Feuchtigkeit und andere Stoffe, die die Elektronik schädigen können, im Flugbetrieb oder bei andersartigen rauen Umgebungsbedingungen nicht in die Folie eindringen und zu den elektrischen bzw. elektronischen Bauelementen vordringen können.

Durch die Erfindung wird insbesondere eine Dünnfilm-Radomanordnung 10 mit einem Dünnfilm-Radom geschaffen, das durch eine oder mehrere der Schutzschichten 14a, 14b, 14c wie oben beschrieben gebildet wird und für elektromagnetische Wellen durchlässig ist, sowie ein Verfahren zu dessen Herstellung.

Antennen und/oder andere elektronische Elemente, wie zum Beispiel Sensoren, elektronische Chips und Metallisierungsschichten zur elektrischen Verbindung der Elemente, sind in der in der wettergeschützten elektronischen Anordnung bzw. Elektronikanordnung 10 als eine dünne Schicht enthalten, die von einer oder mehreren dünnen Schutzschichten 14a, 14b und 14c überdeckt wird, wobei die Schutzschicht oder Schutzschichtanordnung direkt an die Folie 11 angrenzt. Die gesamte elektronische Anordnung 10 bildet somit ein dünnes Schichtsystem oder einen Film auf einer Oberfläche zum Beispiel eines Luftfahrzeugs, eines sonstigen Fahrzeugs, oder einer Windkraftanlage bzw. deren Rotorflügel. Derartige Oberflächen können beispielsweise durch Außenhaut, Rumpf, Tragflächen, Leitwerke, Klappen, Rotorflügel usw. gebildet sein.

Fig. 5 zeigt als weiteres Ausführungsbeispiel der Erfindung ein Flugzeug 30, an dessen Oberfläche 30a mehrere Radom-Anordnungen 10 wie oben beschrieben ausgebildet und angeordnet sind.

### Bezugszeichenliste:

- 10: Elektronikanordnung / Radom-Anordnung
- 11: elektronische Folie
- 11a: Oberfläche
- 11b: Kante
- 12: Struktur
- 12a: Oberfläche
- 13: Adhäsiv / Klebstoff
- 14a, 14b, 14c: Schutzschicht(en)
- 16: Elektronikeinrichtung
- 16a: elektrische bzw. elektronische Elemente
- 17: Übergangselement
- 30: Luftfahrzeug

- L: lateraler Versatz

## Patentansprüche

1. Verfahren zum Herstellen einer Elektronikanordnung, die gegen raue Umgebungsbedingungen geschützt ist, für Luftfahrzeuge, umfassend die Schritte:
Bereitstellen einer Struktur (12), wobei die Struktur eine Außenhaut eines Luftfahrzeugs bildet;
Aufbringen einer Folie (11), die eine Elektronikeinrichtung (16) umfasst, auf einer Oberfläche (12a) der Struktur (12); und
Aufbringen mindestens einer Schutzschicht (14a) auf einer Oberfläche (11a) der Folie (11), um sie vor Beschädigungen durch Umwelteinflüsse zu schützen,
wobei die Schutzschicht (14a) aus einem Verbundmaterial gefertigt wird,
wobei eine Anordnung aus mehreren übereinander liegenden Schutzschichten (14a, 14b, 14c) auf der Folie (11) gebildet wird, die einen lateralen Versatz (L) zueinander aufweisen.

2. Verfahren nach Anspruch 1, **dadurch gekennzeichnet, dass** das Verbundmaterial
einen mit Glasfasern verstärkten Kunststoff umfasst; und/oder
einen mit Kohlenstofffasern verstärkten Kunststoff umfasst.

3. Verfahren nach einem der vorhergehenden Ansprüche, **dadurch gekennzeichnet,**
**dass** die Schutzschicht (14a) oder die Anordnung mehrerer Schutzschichten (14a, 14b, 14c) eine Dicke aufweist, die
geringer ist als die zweifache Dicke der Folie (11); oder
der Dicke der Folie (11) entspricht; oder
geringer ist als die Dicke der Folie (11); oder
geringer ist als die halbe Dicke der Folie (11).

4. Verfahren nach einem der vorhergehenden Ansprüche, **dadurch gekennzeichnet, dass**
zunächst die Folie (11) auf der Struktur (12) aufgebracht wird, und anschließend die Schutzschicht (14a) auf der Folie (11) gebildet wird; oder
zunächst das Verbundmaterial an der Folie (11) befestigt wird, und anschließend die Folie (11) mit dem Verbundmaterial auf der Struktur (12) befestigt wird.

5. Verfahren nach einem der vorhergehenden Ansprüche, **dadurch gekennzeichnet, dass** zum Aufbringen der Schutzschicht (14a, 14b, 14c) die Folie (11)
mit einer vorimprägnierten Schicht (14a, 14b, 14c) versehen wird, die anschließend ausgehärtet wird; und/oder
mit einer teilweise ausgehärteten Schicht (14a, 14b, 14c) versehen wird, die anschließend vollständig ausgehärtet wird; oder
mit der Schutzschicht (14a, 14b, 14c) versehen wird, nachdem die Schutzschicht vollständig ausgehärtet wurde.

6. Verfahren nach einem der vorhergehenden Ansprüche, **dadurch gekennzeichnet, dass** nach dem Befestigen der Folie (11) auf der Oberfläche (12a) der Struktur (12) ein Übergangselement (17) aus einem verformbaren Material an dem Übergang zwischen der Folie (11) und der Struktur (12) angebracht wird, um den Übergang zu glätten.

7. Verfahren nach einem der vorhergehenden Ansprüche, **dadurch gekennzeichnet, dass**
die Schutzschicht (14a) und/oder eine weitere Schicht zumindest teilweise elektrisch leitend ausgestaltet wird; und/oder
die Elektronikanordnung (10) eine Antenne umfasst; und/oder
die Elektronikanordnung (10) als eine Radomanordnung ausgestaltet ist; und/oder
die Elektronikanordnung (10) eine Sensoreinrichtung umfasst und/oder als Sensoreinrichtung ausgestaltet ist.

8. Elektronikanordnung, die gegen raue Umgebungsbedingungen geschützt ist, für Luftfahrzeuge, umfassend:
eine Folie (11), die eine Elektronikeinrichtung (16) umfasst, zur Befestigung auf einer Oberfläche (12a) einer Struktur (12), wobei die Struktur eine Außenhaut eines Luftfahrzeugs bildet; und
mindestens eine Schutzschicht (14a, 14b, 14c), die auf einer Oberfläche (11a) der Folie (11) angeordnet ist, um die Folie (11) vor Beschädigungen durch Umwelteinflüsse zu schützen,
wobei die Schutzschicht (14a, 14b, 14c) aus einem Verbundmaterial gefertigt ist,
wobei eine Anordnung mehrerer Schutzschichten (14a, 14b, 14c) auf der Folie (11) ausgebildet ist, die einen lateralen Versatz (L) zueinander aufweisen.

9. Elektronikanordnung nach Anspruch 8, **dadurch gekennzeichnet, dass** die Schutzschicht (14a, 14b, 14c)
aus einem mit Glasfasern verstärkten Kunststoff gefertigt ist; und/oder
aus einem mit Kohlenstofffasern verstärkten Kunststoff gefertigt ist.

10. Elektronikanordnung nach Anspruch 8 oder 9, **dadurch gekennzeichnet, dass** die Schutzschicht (14a) oder eine Anordnung mehrerer Schutzschichten (14a, 14b, 14c) eine Dicke aufweist, die
geringer ist als die zweifache Dicke der Folie (11); oder
der Dicke der Folie (11) entspricht; oder
geringer ist als die Dicke der Folie (11); oder
10.4. geringer ist als die halbe Dicke der Folie (11).

11. Elektronikanordnung nach einem der Ansprüche 8 bis 10, **gekennzeichnet durch** ein Übergangselement (17) aus einem verformbaren Material an dem Übergang zwischen der Folie (11) und der Struktur (12), um den Übergang (25) zu glätten.

12. Elektronikanordnung nach einem der Ansprüche 8 bis 11, **dadurch gekennzeichnet, dass**
die Schutzschicht (14a, 14b, 14c) und/oder eine weitere Schicht zumindest teilweise elektrisch leitend ausgestaltet ist, und/oder
die Elektronikanordnung (10) eine Antenne umfasst; und/oder
die Elektronikanordnung (10) als eine Radomanordnung ausgestaltet ist; und/oder
die Elektronikanordnung (10) eine Sensoreinrichtung umfasst und/oder als Sensoreinrichtung ausgestaltet ist.

13. Luftfahrzeug, **gekennzeichnet durch** eine Elektronikanordnung (10) nach einem der Patentansprüche 8 bis 12.

## Claims

1. A method of manufacturing an electronics assembly protected against harsh environmental conditions for aircraft, comprising the steps of:
Providing a structure (12), said structure forming an outer skin of an aircraft;
applying a film (11) comprising an electronic device (16) to a surface (12a) of the structure (12); and
surface (12a) of the structure (12); and
applying at least one protective layer (14a) to a surface (11a) of the film (11) to protect it from damage caused by environmental influences,
wherein the protective layer (14a) is made of a composite material,
wherein an arrangement of several superimposed protective layers (14a, 14b, 14c) is formed on the film (11), which have a lateral offset (L) relative to one another.

2. Method according to claim 1, **characterized in that** the composite material comprises comprises a plastic reinforced with glass fibres; and/or comprises a plastic reinforced with carbon fibres.

3. Method according to one of the preceding claims, **characterized in**
**that** the protective layer (14a) or the arrangement of several protective layers (14a, 14b, 14c) has a thickness which is less than twice the thickness of the film (11);
or corresponds to the thickness of the film (11);
or is less than the thickness of the film (11);
or is less than half the thickness of the film (11).

4. Method according to one of the preceding claims, **characterized in that**
first the film (11) is applied to the structure (12), and then the protective layer (14a) is formed on the film (11);
or first the composite material is attached to the foil (11), and then the foil (11) with the composite material is attached to the structure (12).

5. Method according to one of the preceding claims, **characterized in that**, for applying the protective layer (14a, 14b, 14c), the film (11) is provided with a pre-impregnated layer (14a, 14b, 14c), which is subsequently cured;
and/or is provided with a partially cured layer (14a, 14b, 14c), which is then fully cured;
or is provided with the protective layer (14a, 14b, 14c) after the protective layer has been fully cured.

6. Method according to one of the preceding claims, **characterized in that**
after fixing the film (11) to the surface (12a) of the structure (12), a transition element (17) made of a deformable material is applied to the transition between the film (11) and the structure (12) in order to smooth the transition.

7. Method according to one of the preceding claims, **characterized in that** the protective layer (14a) and/or a further layer is designed to be at least partially electrically conductive;
and/or the electronic arrangement (10) comprises an antenna;
and/or the electronic arrangement (10) is designed as a random arrangement;
and/or the electronic arrangement (10) comprises a sensor device and/or is designed as a sensor device.

8. An electronic arrangement, which is protected against harsh environmental conditions, for aircraft, comprising
a foil (11) comprising an electronic device (16) for attachment to a surface (12a) of a structure (12), the structure forming an outer skin of an aircraft; and
at least one protective layer (14a, 14b, 14c) disposed on a surface (11a) of the film (11) to protect the film (11) from damage caused by environmental influences,
wherein the protective layer (14a, 14b, 14c) is made of a composite material,
wherein an arrangement of several protective layers (14a, 14b, 14c) is formed on the foil (11), which have a lateral offset (L) relative to one another.

9. Electronic arrangement according to claim 8, **characterized in that** the protective layer (14a, 14b, 14c) is made of a plastic reinforced with glass fibres;
and/or is made of a plastic reinforced with carbon fibres.

10. Electronic arrangement according to claim 8 or 9, **characterized in that**
the protective layer (14a) or an arrangement of a plurality of protective layers (14a, 14b, 14c) has a thickness which is less than twice the thickness of the film (11);
or corresponds to the thickness of the film (11);
or is less than the thickness of the film (11);
or is less than half the thickness of the film (11).

11. Electronic arrangement according to any one of claims 8 to 10, **characterized by** a transition element (17) made of a deformable material at the transition between the foil (11) and the structure (12) to smooth the transition 25.

12. Electronic arrangement according to one of claims 8 to 11, **characterized in that** the protective layer (14a, 14b, 14c) and/or a further layer is at least partially electrically conductive;
and/or the electronic arrangement (10) comprises an antenna;
and/or the electronic arrangement (10) is designed as a random arrangement;
and/or the electronic arrangement (10) comprises a sensor device and/or is configured as a sensor device.

13. An aircraft, **characterized by** an electronic arrangement (10) according to one of claims 8 to 12.

## Revendications

1. Procédé de fabrication d'un ensemble électronique protégé contre des conditions environnementales difficiles pour des aéronefs, comprenant les étapes consistant à :
Fournir une structure (12), ladite structure formant une enveloppe extérieure d'un aéronef ;
Application d'un film (11) comprenant un dispositif électronique (16) sur une surface de la structure;
surface (12a) de la structure (12) ; et
l'application d'au moins une couche de protection (14a) sur une surface (11a) du film (11) afin de le protéger contre les détériorations dues aux influences environnementales,
la couche de protection (14a) étant fabriquée à partir d'un matériau composite,
un ensemble de plusieurs couches de protection superposées (14a, 14b, 14c) étant formé sur le film (11), ces couches présentant un décalage latéral (L) les unes par rapport aux autres.

2. Procédé selon la revendication 1, **caractérisé en ce que** le matériau composite comprend une matière plastique renforcée par des fibres de verre ; et/ou comprend une matière plastique renforcée par des fibres de carbone.

3. Procédé selon l'une des revendications précédentes, **caractérisé en ce que** ,
**en ce que** la couche de protection (14a) ou l'ensemble de plusieurs couches de protection (14a, 14b, 14c) présente une épaisseur inférieure à deux fois l'épaisseur du film (11) ;
ou égale à l'épaisseur du film (11) ;
ou est inférieure à l'épaisseur du film (11) ;
ou est inférieure à la moitié de l'épaisseur du film (11).

4. Procédé selon l'une des revendications précédentes, **caractérisé en ce que**
on applique d'abord le film (11) sur la structure (12), puis on forme la couche de protection (14a) sur le film (11) ;
ou on fixe d'abord le matériau composite sur le film (11), puis on fixe le film (11) avec le matériau composite sur la structure (12).

5. Procédé selon l'une des revendications précédentes, **caractérisé en ce que**, pour appliquer la couche de protection (14a, 14b, 14c), on munit le film (11) d'une couche pré-imprégnée (14a, 14b, 14c) qui est ensuite durcie ;
et/ou est pourvue d'une couche partiellement durcie (14a, 14b, 14c) qui est ensuite complètement durcie ;
ou est pourvu de la couche de protection (14a, 14b, 14c) après que la couche de protection a été complètement durcie.

6. Procédé selon l'une quelconque des revendications précédentes, **caractérisé en ce que** après avoir fixé le film (11) sur la surface (12a) de la structure (12), on applique un élément de transition (17) en matériau déformable à la jonction entre le film (11) et la structure (12) afin de lisser la transition.

7. procédé selon l'une des revendications précédentes, **caractérisé en ce que** la couche de protection (14a) et/ou une autre couche est conçue au moins partiellement conductrice de l'électricité ;
et/ou l'ensemble électronique (10) comprend une antenne ;
et/ou l'agencement électronique (10) est conçu comme un agencement de radôme ;
et/ou l'ensemble électronique (10) comprend un dispositif de détection et/ou est conçu comme un dispositif de détection.

8. Dispositif électronique protégé contre des conditions environnementales difficiles, pour des aéronefs, comprenant :
une feuille (11) comprenant un dispositif électronique (16) destiné à être fixé sur une surface (12a) d'une structure (12), la structure formant un revêtement extérieur d'un aéronef ; et
au moins une couche de protection (14a, 14b, 14c) disposée sur une surface (11a) du film (11) pour protéger le film (11) contre les dommages dus aux influences environnementales, la couche de protection (14a, 14b, 14c) étant fabriquée à partir d'un matériau composite, un agencement de plusieurs couches de protection (14a, 14b, 14c) étant formé sur le film (11), lesquelles présentent un décalage latéral (L) les unes par rapport aux autres.

9. Dispositif électronique selon la revendication 8, **caractérisé en ce que** la couche de protection (14a, 14b, 14c) est fabriquée à partir d'une matière plastique renforcée par des fibres de verre ;
et/ou est fabriquée à partir d'une matière plastique renforcée par des fibres de carbone.

10. Dispositif électronique selon la revendication 8 ou 9, **caractérisé en ce que** la couche de protection (14a) ou un ensemble de plusieurs couches de protection (14a, 14b, 14c) présente une épaisseur inférieure à deux fois l'épaisseur du film (11) ;
ou égale à l'épaisseur du film (11) ;
ou est inférieure à l'épaisseur du film (11) ;
ou est inférieure à la moitié de l'épaisseur du film (11).

11. Dispositif électronique selon l'une des revendications 8 à 10, **caractérisé par** un élément de transition (17) en un matériau déformable à la jonction entre le film (11) et la structure (12) pour lisser la transition 25.

12. Dispositif électronique selon l'une des revendications 8 à 11, **caractérisé en ce que** la couche de protection (14a, 14b, 14c) et/ou une autre couche sont conçues au moins partiellement conductrices de l'électricité ;
et/ou l'ensemble électronique (10) comprend une antenne ;
et/ou le dispositif électronique (10) est conçu comme un dispositif de radôme ;
et/ou l'ensemble électronique (10) comprend un dispositif de détection et/ou est conçu comme un dispositif de détection.

13. Aéronef, **caractérisé par** un ensemble électronique (10) selon l'une des revendications 8 à 12.
